# EUROPÄISCHE PATENTSCHRIFT

(11) **EP 1 788 226 B1**
(45) Veröffentlichungstag und Bekanntmachung des Hinweises auf die Patenterteilung: **13.10.2010**
(21) Anmeldenummer: 05110843.9
(22) Anmeldetag: 17.11.2005
(51) Int. Cl.: F02D 37/02, F02D 41/34, F02D 41/40, F02D 31/00

(54) **Verfahren zum Ausgleich von Drehungleichförmigkeiten einer direkteinspritzenden Brennkraftmaschine mit Fremdzündung**
Method for compensating engine speed fluctuations of a direct injection spark ignited engine
Procédé pour l'égalisation des fluctuations du régime d'un moteur à combustion interne à injection directe et allumage commandé

(43) Veröffentlichungstag der Anmeldung: 23.05.2007
(73) Patentinhaber: Ford Global Technologies, LLC, Dearborn, MI 48126 (US)
(72) Erfinder: Zimmermann, Diana, 51105 Köln (DE); Brinkmann, Franz, 50354 Hürth-Efferen (DE)
(74) Vertreter: Drömer, Hans-Carsten

(56) Entgegenhaltungen:
- EP-A- 1 258 622
- EP-A- 1 403 495
- DE-A1-102004 014 369
- US-B1- 6 173 692

## Beschreibung

Die Erfindung betrifft ein Verfahren zum Ausgleich von Drehungleichförmigkeiten einer direkteinspritzenden Brennkraftmaschine mit Fremdzündung, bei dem die Einspritzung von Kraftstoff in mindestens einen Brennraum der Brennkraftmaschine in der Art variiert wird, dass bei einer zu niedrigen Drehzahl der Brennkraftmaschine der effektive Mitteldruck pₘₑ erhöht wird und bei einer zu hohen Drehzahl der effektive Mitteldruck pₘₑ gesenkt wird.

Aufgrund der begrenzten Ressourcen an fossilen Energieträgern, insbesondere aufgrund der begrenzten Vorkommen an Mineralöl als Rohstoff für die Gewinnung von Brennstoffen für den Betrieb von Verbrennungskraftmaschinen, ist man bei der Entwicklung von Verbrennungsmotoren ständig bemüht, den Kraftstoffverbrauch zu minimieren, wobei eine verbesserte d. h. effektivere Verbrennung im Vordergrund der Bemühungen steht.

Problematisch sind der Kraftstoffverbrauch und damit der Wirkungsgrad insbesondere bei Ottomotoren. Der Grund hierfür liegt im prinzipiellen Arbeitsverfahren des traditionellen Ottomotors. Der traditionelle Ottomotor arbeitet mit einem homogenen Brennstoff-Luftgemisch, daß durch äußere Gemischbildung aufbereitet wird, indem in die angesaugte Luft im Ansaugtrakt Kraftstoff eingebracht wird. Die Einstellung der gewünschten Leistung erfolgt durch Veränderung der Füllung des Brennraumes, so daß dem Arbeitsverfahren des Ottomotors - anders als beim Dieselmotor - eine Quantitätsregelung zugrunde liegt.

Diese Laststeuerung erfolgt in der Regel mittels einer im Ansaugtrakt vorgesehenen Drosselklappe. Durch Verstellen der Drosselklappe kann der Druck der angesaugten Luft hinter der Drosselklappe mehr oder weniger stark reduziert werden. Je weiter die Drosselklappe geschlossen ist d. h. je mehr sie den Ansaugtrakt versperrt desto höher ist der Druckverlust der angesaugten Luft über die Drosselklappe hinweg und desto geringer ist der Druck der angesaugten Luft hinter der Drosselklappe und vor dem Einlaß in den Brennraum. Bei konstantem Brennraumvolumen kann auf diese Weise über den Druck der angesaugten Luft die Luftmasse d. h. die Quantität eingestellt werden. Dies erklärt auch, weshalb sich diese Art der Quantitätsregelung gerade im Teillastbereich als nachteilig erweist, denn geringe Lasten erfordern eine hohe Drosselung und Druckabsenkung im Ansaugtrakt. Die Quantitätsregelung mittels Drosselklappe hat daher thermodynamische Nachteile. Um die beschriebenen Drosselverluste zu senken, wurden verschiedene Strategien zur Laststeuerung entwickelt. Ein Lösungsansatz zur Entdrosselung des ottomotorischen Arbeitsverfahrens besteht in der Verwendung eines variablen Ventiltriebs.

Ein anderer Lösungsansatz zur Verbesserung des Kraftstoffverbrauchs von Ottomotoren basiert auf der Übernahme technischer Merkmale, die ursprünglich als Kennzeichen des dieselmotorischen Verfahrens galten.

Das traditionelle ottomotorische Verfahren ist dabei gekennzeichnet durch eine Gemischverdichtung, ein homogenes Gemisch, eine Fremdzündung, sowie die Quantitätsregelung, wohingegen das dieselmotorische Verfahren charakterisiert ist durch eine Luftverdichtung, ein inhomogenes Gemisch, eine Selbstzündung und die Qualitätsregelung. Der geringe Kraftstoffverbrauch der Dieselmotoren resultiert unter anderem aus einem hohen Verdichtungsverhältnis und geringen Ladungswechselverlusten aufgrund der Qualitätsregelung des Dieselmotors.

Insbesondere die Einspritzung von Kraftstoff direkt in den Brennraum des Zylinders wird dabei als eine geeignete Maßnahme angesehen, um eine spürbare Reduzierung des Kraftstoffverbrauchs von Ottomotoren zu erzielen, weshalb man sich auf die Entwicklung direkteinspritzender Ottomotoren konzentriert hat.

Dabei wird während der Kompressionsphase der Kraftstoff direkt in die in den Brennraum angesaugte Luft eingespritzt. Für die Einspritzung des Kraftstoffes, die Gemischaufbereitung, nämlich die Durchmischung von Luft und Kraftstoff und die Aufbereitung des Kraftstoffes im Rahmen von Vorreaktionen einschließlich der Verdampfung, sowie der Zündung des aufbereiteten Gemisches und der Verbrennung stehen vergleichsweise kurze Zeiträume in der Größenordnung von Millisekunden zur Verfügung. Infolgedessen liegt in der Regel während der Zündung und Verbrennung ein sehr inhomogenes Kraftstoff-Luft-Gemisch vor, welches nicht durch ein einheitliches Luftverhältnis charakterisiert wird, sondern sowohl magere Gemischteile als auch fette Gemischteile aufweist. Die Bildung des für das dieselmotorische Verfahren charakteristischen Rußes, der in Gemischteilen mit einem unterstöchiometrischen lokalen Luftverhältnis und bei Temperaturen oberhalb 1300°K unter extremen Luftmangel gebildet wird, wird dabei in Kauf genommen.

Bedingt durch die Direkteinspritzung des Kraftstoffes in den Brennraum, die nur wenig Zeit zur Aufbereitung eines brennfähigen Kraftstoff-Luftgemisches zur Verfügung stellt, sind direkteinspritzende ottomotorische Verfahren wesentlich empfindlicher gegenüber Störungen bzw. Abweichungen bei der Einspritzung und der Zündung als herkömmliche ottomotorische Verfahren.

Aus diesem Grund fokussieren sich die Entwicklungsarbeiten insbesondere auf die Verbesserung der Gemischaufbereitung. Dabei können im wesentlichen drei Brennverfahren unterschieden werden.

Beim luftgeführten Brennverfahren wird versucht, eine Ladungsbewegung beim Ansaugen der Luft in den Brennraum zu erzeugen, um auf diese Weise eine gute Durchmischung der angesaugten Luft und des direkt eingespritzten Kraftstoffes zu erzielen. Dabei wird eine möglichst weiträumige Verteilung des Kraftstoffes im gesamten Brennraum angestrebt. Bei dem in der EP 1 258 622 beschriebenen Verfahren wird hierzu ein Luftwirbelgenerator zur Erzeugung eines sogenannten Tumbles verwendet und der Einspritzstrahl gegen die Luftströmung gerichtet.

Beim wandgeführten Verfahren wird der Kraftstoff in der Art in den Brennraum eingespritzt, daß der Einspritzstrahl gezielt auf eine den Brennraum begrenzende Wand gerichtet wird, vorzugsweise in eine am Kolbenboden vorgesehene Mulde. Der Kraftstoffstrahl soll dabei durch den Aufprall in mehrere Teilstrahlen aufgespalten und umgelenkt werden, so daß ein möglichst großer Bereich des Brennraums von den Kraftstoffstrahlen erfaßt wird.

Beim strahlgeführten Verfahren wird der Kraftstoff bewußt in Richtung Zündkerze eingespritzt, was durch eine entsprechende Ausrichtung des Einspritzstrahls erreicht wird. Der Gemischtransport erfolgt dabei im wesentlichen durch den Impuls des Einspritzstrahls, wobei die Bewegung der angesaugten Luft von untergeordneter Bedeutung ist und eine teilweise Verdampfung des Kraftstoffes angestrebt wird bevor der Kraftstoff die Zündkerze erreicht. Im Vergleich zu den zuvor beschriebenen Verfahren ist dabei die Ausdehnung der aufbereiteten KraftstofF-Luft-Gemischwolke prinzipbedingt begrenzt.

Folglich ist das strahlgeführte Verfahren störanfälliger bzw. empfindlicher, insbesondere gegenüber Änderungen bzw. Abweichungen bei der Einspritzung und bei der Zündung, die zu stärkeren Schwankungen im effektiven Mitteldruck pₘₑ führen. Hieraus resultieren unter anderem Drehungleichförmigkeiten d. h. Drehzahlschwankungen der Brennkraftmaschine. Dieser Nachteil wird aber in Kauf genommen, da das strahlgeführte Verfahren bei direkteinspritzenden Ottomotoren weitere Verbrauchsvorteile verspricht.

Vor diesem Hintergrund ist es die Aufgabe der vorliegenden Erfindung, ein Verfahren zum Ausgleich von Drehungleichförmigkeiten einer direkteinspritzenden Brennkraftmaschine mit Fremdzündung gemäß dem Oberbegriff des Anspruches 1 bereitzustellen, mit dem den aus dem Stand der Technik bekannten Problemen entgegen gewirkt werden kann und welches insbesondere den Einsatz von strahlgeführten Verfahren unterstützt.

Gelöst wird diese Aufgabe durch ein Verfahren zum Ausgleich von Drehungleichförmigkeiten einer direkteinspritzenden Brennkraftmaschine mit Fremdzündung, bei dem die Einspritzung von Kraftstoff in mindestens einen Brennraum der Brennkraftmaschine in der Art variiert wird, daß bei einer zu niedrigen Drehzahl der Brennkraftmaschine der effektive Mitteldruck pₘₑ erhöht wird und bei einer zu hohen Drehzahl der effektive Mitteldruck pₘₑ gesenkt wird, und das dadurch gekennzeichnet ist, daß
■ ausgehend von einer vorgebbaren und als erste Triggermarke dienenden Kurbelwinkelmarke für den Einspritzbeginn der Einspritzung eine als zweite Triggermarke dienende Kurbelwinkelmarke für die Zündung bestimmt wird, indem eine Zeitkonstante oder eine Kombination aus einer Zeitkonstante und einem Kurbelwinkelintervall zu der ersten Triggermarke hinzuaddiert wird.

Das erfindungsgemäße Verfahren führt zu einem selbsttätigen Ausgleich von Drehungleichförmigkeiten, was im folgenden kurz erläutert wird.

Grundsätzlich wird der Zündzeitpunkt d. h. die zweite Triggermarke dadurch bestimmt und vorgegeben, daß eine Zeitkonstante oder ein Kurbelwinkelintervall auf eine vorgebbare erste Triggermarke - den Einspritzbeginn - aufgeschlagen d. h. hinzuaddiert wird.

Ausgehend von einer Solldrehzahl, die im stationären Betrieb der Brennkraftmaschine möglichst exakt aufrechterhalten werden soll, sind zwei unterschiedliche Störungen des Betriebs der Brennkraftmaschine in Form von Drehungleichförmigkeiten denkbar, nämlich ein ungewollter Abfall der Drehzahl oder eine ungewollte Zunahme der Drehzahl der Brennkraftmaschine.

Ist die Istdrehzahl niedriger als die Solldrehzahl, wird die Zündung bei unveränderter Zeitkonstante infolge der geringeren Drehzahl nach früh verschoben, was zu einer Anhebung des effektiven Mitteldrucks pₘₑ führt. Der erhöhte effektive Mitteldruck pₘₑ verursacht eine Beschleunigung der Kurbelwelle d. h. der Brennkraftmaschine, also eine Erhöhung der Istdrehzahl. Die Istdrehzahl wird damit der Solldrehzahl angepaßt.

Die Verwendung einer Kombination aus einer Zeitkonstanten und einem Kurbelwinkelintervall führt dabei ebenfalls zu dem gewünschten Erfolg, nämlich einer Anpassung der Istdrehzahl an die Solldrehzahl. Die beiden die Kombination bildenden Anteile, nämlich die Zeitkonstante einerseits und das Kurbelwinkelintervall andererseits, können in unterschiedlicher Weise gewichtet sein. Auch die beiden Grenzfälle sind dabei mitumfaßt. Die Kombination d. h. der Term, der zur ersten Triggermarke hinzuaddiert wird, um die zweite Triggermarke zu bestimmen, kann eine reine Zeitkonstante sein, so daß die erste Alternative des erfindungsgemäßen Verfahrens vorliegt, oder aber sich vollständig als Kurbelwinkelintervall darstellen.

Verfahren, die sich einer Kombination bedienen, werden weiter unten noch im Zusammenhang mit den bevorzugten Ausführungsformen erörtert. Dabei werden auch die Möglichkeiten und Vorteile aufgezeigt, die sich aus der Verwendung einer Kombination aus Zeitkonstante und Kurbelwinkelintervall ergeben.

Die Festlegung des Zündzeitpunktes mittels des erfindungsgemäßen Verfahrens d. h. mittels des erfindungsgemäßen Algorithmus beinhaltet eine selbstregelnde Drehzahlanpassung zum Ausgleich von Drehungleichförmigkeiten. Einem Drehzahlabfall wird automatisch entgegen gewirkt, ohne daß weitere Maßnahmen erforderlich wären.

Dies gilt auch für zu hohe Drehzahlen. Ist die Istdrehzahl höher als die Solldrehzahl, wird die Zündung bei unveränderter Zeitkonstante nach spät verschoben, was zu einer Absenkung des effektiven Mitteldrucks pₘₑ führt. Der abgesenkte effektive Mitteldruck pₘₑ verursacht eine Verzögerung der Kurbelwelle d. h. der Brennkraftmaschine, also eine Abnahme der Istdrehzahl. Die Istdrehzahl wird wieder der Solldrehzahl angepaßt. Die Verwendung einer Kombination ist ebenfalls bei zu hohen Drehzahlen zielführend.

Dadurch wird die der Erfmdung zugrunde liegende Aufgabe gelöst, nämlich ein Verfahren gemäß dem Oberbegriff des Anspruches 1 bereitzustellen, mit dem den aus dem Stand der Technik im Zusammenhang mit direkteinspritzenden Ottomotoren bekannten Problemen entgegen gewirkt werden kann und welches den Einsatz von strahlgeführten Verfahren unterstützt.

Weitere Vorteile des erfindungsgemäßen Verfahrens werden im Zusammenhang mit den Ausführungsformen gemäß den Unteransprüchen erörtert.

Vorteilhaft sind Ausführungsformen des Verfahrens, bei denen die Zeitkonstante und/oder das Kurbelwinkelintervall eine von mindestens einem Betriebsparameter der Brennkraftmaschine abhängige Variable ist.

Die die Einspritzung charakterisierenden Parameter - Einspritzbeginn, Einspritzdauer und gegebenenfalls Einspritzdruck - beeinflussen die Einspritzung und den Brennprozeß maßgeblich und werden entsprechend dem jeweiligen bzw. momentanen Betriebszustand der Brennkraftmaschine gewählt d. h. diese Parameter werden in Abhängigkeit eines oder mehrerer Betriebsparameter der Brennkraftmaschine, beispielsweise der Drehzahl und/oder der Last und/oder dergleichen, variiert.

Gemäß der in Rede stehenden Ausführungsform des erfindungsgemäßen Verfahrens wird die Zeitkonstante oder das Kurbelwinkelintervall ebenfalls in Abhängigkeit mindestens eines Betriebsparameters der Brennkraftmaschine gewählt bzw. variiert. Vorzugsweise wird die Zeitkonstante oder das Kurbelwinkelintervall einem Kennfeld als Funktion der Drehzahl und/oder der Last und/oder dergleichen entnommen.

Umfaßt der mindestens eine Betriebsparameter die Drehzahl der Brennkraftmaschine, wird die Zeitkonstante oder das Kurbelwinkelintervall vorzugsweise unter Verwendung der Solldrehzahl aus dem Kennfeld ausgelesen, um die oben beschriebenen Effekte zu erzielen d. h. eine selbstregelnde Drehzahlanpassung zu gewährleisten.

Bei der Verwendung einer Kombination aus einer Zeitkonstanten und einem Kurbelwinkelintervall können beide Anteile oder aber nur ein Anteil des die Kombination bildenden Terms von mindestens einem Betriebsparameter der Brennkraftmaschine abhängig sein.

Vorteilhaft sind Ausführungsformen des Verfahrens, bei denen ausgehend von der als erste Triggermarke dienenden Kurbelwinkelmarke für den Einspritzbeginn der Einspritzung das Einspritzende bestimmt wird, indem eine erste Zeitkonstante oder eine erste Kombination aus einer ersten Zeitkonstante und einem ersten Kurbelwinkelintervall zu der ersten Triggermarke hinzuaddiert wird.

Hinsichtlich der Verwendung einer Kombination wird bezug genommen auf die oben gemachten Ausführungen. Im folgenden werden die beiden Grenzfälle erörtert d. h. die Verfahrensvarianten, bei denen die Kombination eine reine Zeitkonstante ist oder aber sich vollständig als Kurbelwinkelintervall darstellt.

Wird bei zu niedriger Drehzahl zur Bestimmung bzw. Festlegung des Einspritzendes - ausgehend vom Einspritzbeginn - eine unveränderte Zeitkonstante verwendet, bleibt die Einspritzdauer und damit auch im wesentlichen die eingespritzte Kraftstoffmenge unverändert. Der Einfluß des Brennraumdrucks auf den Einspritzvorgang bzw. die Einspritzmenge wird an dieser Stelle außer Acht gelassen. Das Einspritzende wird somit lediglich nach früh verschoben, wobei der Einfluß der Verschiebung des Einspritzendes auf den effektiven Mitteldruck pₘₑ von untergeordneter Bedeutung ist.

Wird hingegen ein unverändertes Kurbelwinkelintervall verwendet, führt dies infolge der - im Vergleich zur Solldrehzahl - zu niedrigen Drehzahl zu einer Verlängerung der Einspritzdauer und damit zu einer Erhöhung der eingespritzten Kraftstoffmenge, was zu einer Anhebung des effektiven Mitteldrucks pₘₑ führt. Der erhöhte effektive Mitteldruck pₘₑ verursacht eine Beschleunigung der Kurbelwelle d.h. der Brennkraftmaschine, also eine Erhöhung der Istdrehzahl. Die Festlegung des Einspritzendes mittels Kurbelwinkelintervall verstärkt somit den oben beschriebenen Effekt der Anpassung der Istdrehzahl an die Solldrehzahl. Die selbstregelnde Drehzahlanpassung reagiert damit empfindlicher bzw. stärker, wobei das Einspritzende unverändert bleibt d. h. nicht nach früh verschoben wird.

Auch in dem Fall, in dem die Istdrehzahl höher ist als die Solldrehzahl, bleibt die Einspritzdauer und damit die eingespritzte Kraftstoffmenge bei Verwendung einer unveränderten Zeitkonstante unverändert, wohingegen das Einspritzende nach spät verschoben wird.

Wird ein unverändertes Kurbelwinkelintervall verwendet, führt dies infolge der zu hohen Drehzahl zu einer Verkürzung der Einspritzdauer und damit zu einer Reduzierung der eingespritzten Kraftstoffmenge, was zu einer Absenkung des effektiven Mitteldrucks pₘₑ führt. Der verringerte effektive Mitteldruck pₘₑ bedingt eine Verzögerung der Kurbelwelle d.h. der Brennkraftmaschine, also eine Absenkung der Istdrehzahl. Die Festlegung des Einspritzendes mittels Kurbelwinkelintervall verstärkt somit die selbstregelnde Drehzahlanpassung nicht nur bei zu niedrigen, sondern auch bei zu hohen Istdrehzahlen. Das Einspritzende bleibt unverändert d. h. wird nicht nach spät verschoben.

Vorteilhaft sind Ausführungsformen des Verfahrens, bei denen die Bestimmung der zweiten Triggermarke ausgehend von der ersten Triggermarke in zwei Schritten erfolgt, wobei
■ ausgehend von der als erste Triggermarke dienenden Kurbelwinkelmarke für den Einspritzbeginn der Einspritzung das Einspritzende bestimmt wird, indem eine erste Zeitkonstante oder eine erste Kombination aus einer ersten Zeitkonstante und einem ersten Kurbelwinkelintervall zu der ersten Triggermarke hinzuaddiert wird, und
■ ausgehend von dem auf diese Weise bestimmten Einspritzende die als zweite Triggermarke dienende Kurbelwinkelmarke für die Zündung bestimmt wird, indem eine zweite Zeitkonstante oder eine zweite Kombination aus einer zweiten Zeitkonstante und einem zweiten Kurbelwinkelintervall zu dem zuvor bestimmten Einspritzende hinzuaddiert wird.

Bei dieser Ausführungsform wird der Zündzeitpunkt in einem zweistufigen Verfahren ermittelt, wobei in jedem der beiden Verfahrensschritte eine Zeitkonstante, ein Kurbelwinkelintervall oder eine Kombination aus einer Zeitkonstante und einem Kurbelwinkelintervall Verwendung finden kann.

Hinsichtlich der Bestimmung des Einspritzendes im Rahmen des ersten Verfahrensschrittes wird Bezug genommen auf die zuvor erörterte Ausführungsform. Da aber bei der in Rede stehenden Verfahrensvariante der Zündzeitpunkt d. h. die zweite Triggermarke in einem zweiten Verfahrensschritt ausgehend von diesem Einspritzende und nicht ausgehend vom Einspritzbeginn ermittelt wird, ist die Verwendung einer Zeitkonstanten bei der Bestimmung des Einspritzendes nicht ohne Einfluß. Wie im Zusammenhang mit der zuvor beschriebenen Ausführungsform aufgezeigt wurde, führt die Verwendung einer Zeitkonstanten zu einer Verschiebung des Einspritzendes nach früh bei zu niedrigen Drehzahlen bzw. nach spät bei zu hohen Drehzahlen.

Da das Einspritzende der Ausgangspunkt für die Ermittlung des Zündzeitpunktes ist, impliziert eine Verschiebung des Einspritzendes nach früh bzw. nach spät eine Verschiebung des Zündzeitpunktes nach früh bzw. nach spät, wobei dieser Effekt die selbstregelnde Drehzahlanpassung verstärkt. Wie oben bereits ausgeführt wurde, wird die Zündung bei unveränderter Zeitkonstante und zu niedriger Drehzahl nach früh verschoben, der effektive Mitteldruck pₘₑ angehoben und die Kurbelwelle beschleunigt. Hingegen wird die Zündung bei unveränderter Zeitkonstante und zu hoher Drehzahl nach spät verschoben, der effektive Mitteldruck pₘₑ abgesenkt und die Kurbelwelle verzögert.

Hinsichtlich der Bestimmung des Zündzeitpunktes im Rahmen des zweiten Verfahrensschrittes kann verwiesen werden auf die Ausführungen, die im Zusammenhang mit dem allgemeinen Verfahren gemäß Anspruch 1 gemacht worden sind. Die Verwendung einer Zeitkonstante führt zu einer Verschiebung des Zündzeitpunktes nach früh bzw. nach spät. Die sich dabei einstellenden Effekt sind die bereits mehrfach Beschriebenen. Die Verwendung eines Kurbelwinkelintervalls zur Bestimmung des Zündzeitpunktes ist - wenn der zweite Verfahrensschritt isoliert betrachtet wird - ohne Einfluß auf den Zündzeitpunkt. Eine Kombination aus einer Zeitkonstanten und einem Kurbelwinkelintervall führt in Abhängigkeit von der Gewichtung der beiden die Kombination bildenden Anteile zu einer mehr oder weniger starken Verschiebung des Zündzeitpunktes und damit zu einer mehr oder weniger starken Abschwächung der durch eine reine Zeitkonstante erzielten Effekte.

Vorteilhaft sind dabei Ausführungsformen des Verfahrens, bei denen die erste Zeitkonstante und/oder das erste Kurbelwinkelintervall eine von mindestens einem Betriebsparameter der Brennkraftmaschine abhängige Variable ist.

Vorteilhaft sind dabei des weiteren Ausführungsformen des Verfahrens, bei denen die zweite Zeitkonstante und/oder das zweite Kurbelwinkelintervall eine von mindestens einem Betriebsparameter der Brennkraftmaschine abhängige Variable ist.

Wie bereits weiter oben ausgeführt wurde, wird die Einspritzung d. h. der Einspritzbeginn und die Einspritzdauer sowie die Zündung d. h. der Zündzeitpunkt entsprechend dem momentanen Betriebpunkt, beispielsweise gekennzeichnet durch die Drehzahl und die Last, gewählt und eingestellt. Eine ähnliche Vorgehensweise wird daher auch für die beiden Zeitkonstanten und/oder die beiden Kurbelwinkelintervalle bevorzugt.

Vorteilhaft sind Ausführungsformen des Verfahrens, bei denen die als erste Triggermarke dienende Kurbelwinkelmarke für den Einspritzbeginn bestimmt wird, indem ausgehend von einer vorgebbaren und als Start-Triggermarke dienenden Kurbelwinkelmarke eine dritte Zeitkonstante oder eine dritte Kombination aus einer dritten Zeitkonstanten und einem dritten Kurbelwinkelintervall zu der Start-Triggermarke hinzuaddiert wird.

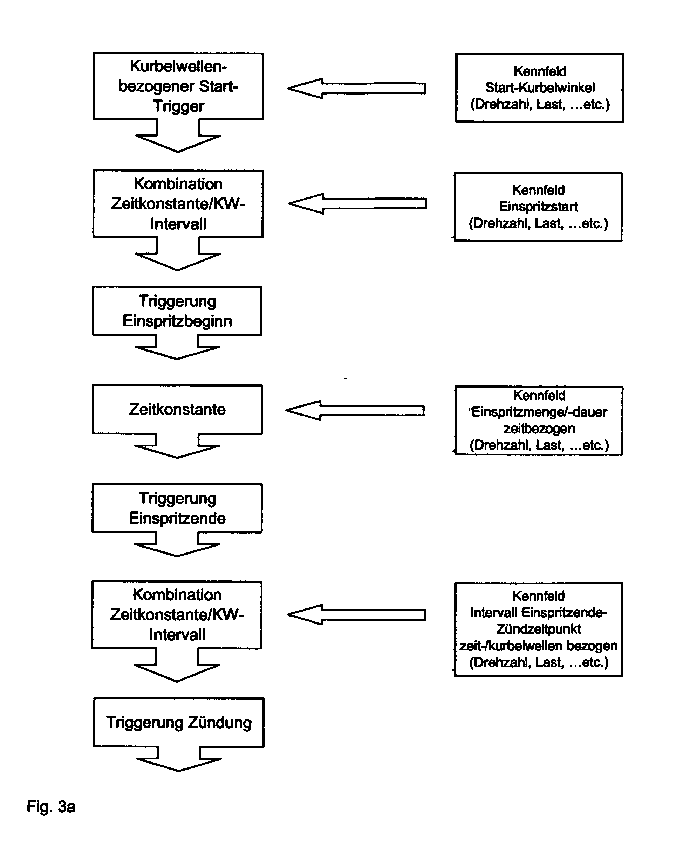

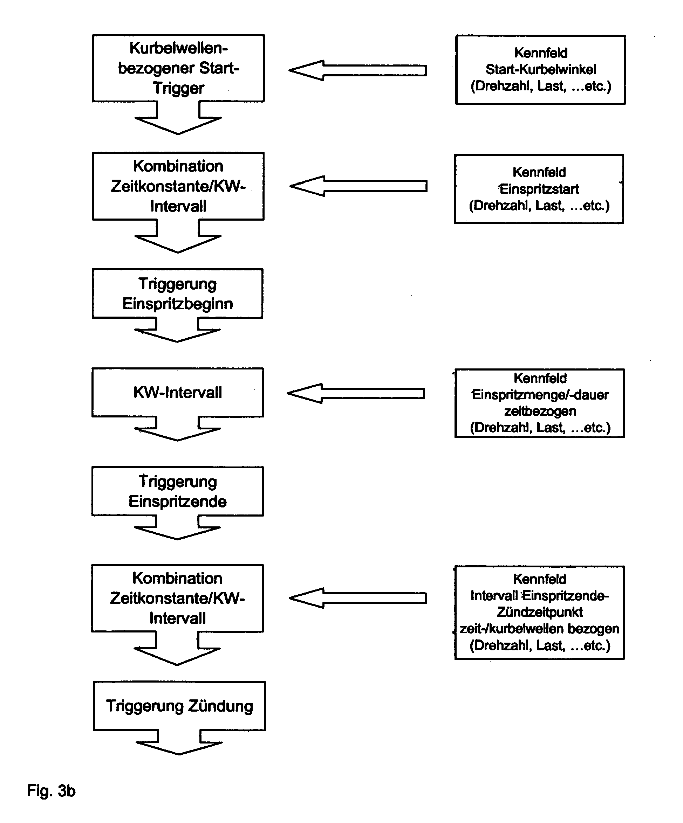

Hierdurch wird eine weitere Möglichkeit der Einflußnahme auf den Zündzeitpunkt und damit auf die Drehzahl eröffnet. Die Verwendung einer dritten Kombination aus einer dritten Zeitkonstanten und einem dritten Kurbelwinkelintervall kann indirekt dazu dienen, den Zündzeitpunkt zu verschieben, was weiter unten noch im Zusammenhang mit den Figuren 3a und 3b erläutert werden wird.

Vorteilhaft sind dabei Ausführungsformen des Verfahrens, bei denen die als Start-Triggermarke dienende Kurbelwinkelmarke eine von mindestens einem Betriebsparameter der Brennkraftmaschine abhängige Variable ist.

Vorteilhaft sind dabei des weiteren Ausführungsformen des Verfahrens, bei denen die dritte Zeitkonstante oder das dritte Kurbelwinkelintervall eine von mindestens einem Betriebsparameter der Brennkraftmaschine abhängige Variable ist.

Es wird Bezug genommen auf die bereits weiter oben gemachten Ausführungen hinsichtlich des Einflusses der Betriebsparameter auf die Auswahl und die Einstellung der Einspritzung und Zündung. Es wird bevorzugt, die verwendeten Zeitkonstanten bzw. Kurbelwinkelintervalle ebenfalls entsprechend dem jeweiligen Betriebspunkt der Brennkraftmaschine gemäß den momentanen Anforderungen zu wählen.

Vorteilhaft sind grundsätzlich Ausführungsformen des Verfahrens, bei denen der mindestens eine Betriebsparameter die Drehzahl und/oder die Last der Brennkraftmaschine umfaßt.

Vorteilhaft sind Ausführungsformen des Verfahrens, bei denen das Brennverfahren der Brennkraftmaschine im wesentlichen strahlgeführt wird. Das strahlgeführte Verfahren ist empfmdlicher und anfälliger für Störungen, insbesondere für Drehzahlschwankungen. Eine selbstregelnde Drehzahlanpassung verspricht also gerade bei diesem Brennverfahren eine spürbare Verbesserung hinsichtlich der Aufrechterhaltung eines konkreten effektiven Mitteldrucks pₘₑ und damit der Drehzahl im stationären Betrieb der Brennkraftmaschine.

Vorteilhaft sind Ausführungsformen des Verfahrens, bei denen die Motorsteuerung der Brennkraftmaschine für die Bestimmung der Triggermarken verwendet wird. Der Algorithmus, der bei der Durchführung des erfindungsgemäßen Verfahrens zu durchlaufen ist, wird vorzugsweise unter Verwendung der Motorsteuerung bzw. der CPU (Control Process Unit) durchgeführt. Dies auch, weil die Motorsteuerung die Möglichkeit bietet, die verwendeten Zeitkonstanten und Kurbelwinkelintervalle, vorzugsweise in Kennfeldern, zu speichern.

Im folgenden wird die Erfindung anhand von acht Ausführungsbeispielen gemäß den Figuren 1 bis 4b näher beschrieben. Hierbei zeigt:
- Fig.1a: eine erste Ausführungsform des Verfahrens,
- Fig.1b: eine zweite Ausführungsform des Verfahrens,
- Fig. 2a: eine dritte Ausführungsform des Verfahrens,
- Fig. 2b: eine vierte Ausführungsform des Verfahrens,
- Fig. 3a: eine fünfte Ausführungsform des Verfahrens,
- Fig. 3b: eine sechste Ausführungsform des Verfahrens,
- Fig. 4a: eine siebte Ausführungsform des Verfahrens, und
- Fig. 4b: eine achte Ausführungsform des Verfahrens.

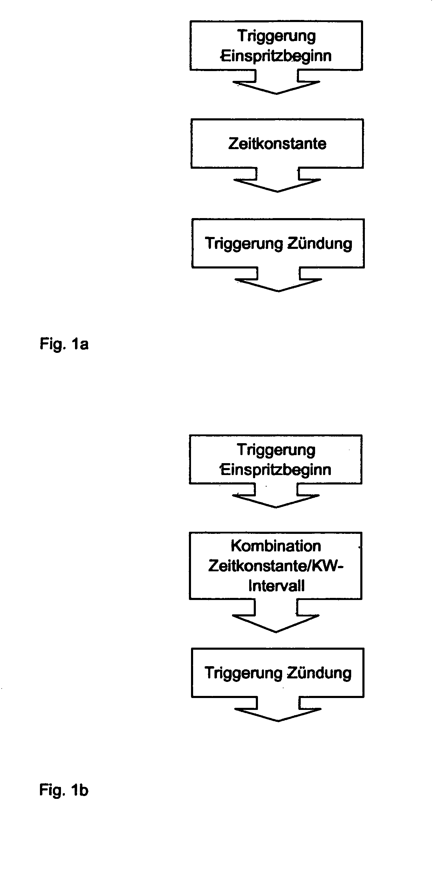

Figur 1a zeigt eine erste Ausführungsform des Verfahrens und zwar die Grundform des Verfahrens, die dadurch gekennzeichnet ist, daß die Anzahl der Verfahrensschritte im Vergleich zu den übrigen Verfahrensvarianten gering ist.

Ausgehend von einer als erste Triggermarke dienenden Kurbelwinkelmarke für den Einspritzbeginn wird der Zündzeitpunkt d. h. eine zweite Triggermarke ermittelt, indem eine Zeitkonstante zur Triggermarke für den Einspritzbeginn hinzuaddiert wird.

Ist die Drehzahl niedriger als durch die Solldrehzahl vorgeschrieben, wird die Zündung bei unveränderter Zeitkonstante aufgrund der zu niedrigen Drehzahl nach früh verschoben, weil die Kurbelwelle in dem unveränderten d. h. gleichgroßen Zeitfenster ein kleineres Kurbelwinkelfenster überstreicht. Dies führt zu einer Anhebung des effektiven Mitteldrucks pₘₑ und einer Beschleunigung der Kurbelwelle. Die Istdrehzahl wird dadurch an die Solldrehzahl angepaßt.

Bei zu hohen Drehzahlen hingegen wird die Zündung bei unveränderter Zeitkonstante nach spät verschoben, der effektive Mitteldruck pₘₑ abgesenkt und die Kurbelwelle verzögert, was zu einer Absenkung der Istdrehzahl führt.

Figur 1b zeigt eine zweite Ausführungsform des Verfahrens. Im Unterschied zu der in Figur 1a dargestellten Verfahrensvariante wird dabei eine Kombination aus einer Zeitkonstanten und einem Kurbelwinkelintervall verwendet, was ebenfalls zu einer Anpassung der Istdrehzahl an die Solldrehzahl führt.

Eine Kombination aus einer Zeitkonstanten und einem Kurbelwinkelintervall führt dabei in Abhängigkeit von der Gewichtung der beiden die Kombination bildenden Anteile zu einer mehr oder weniger starken Verschiebung des Zündzeitpunktes und damit zu einer mehr oder weniger starken Abschwächung der durch eine reine Zeitkonstante - siehe Figur 1a - erzielten Effekte.

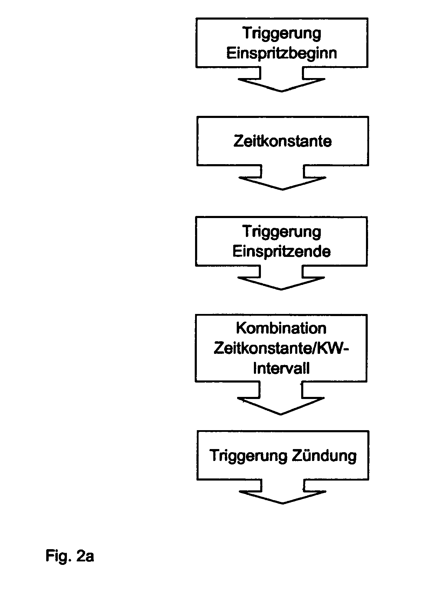

Figur 2a zeigt eine dritte Ausführungsform des Verfahrens. Diese Ausführungsform ist dadurch gekennzeichnet, daß die Bestimmung des Zündzeitpunktes in einem zweistufigen Verfahren erfolgt.

Ausgehend vom Einspritzbeginn als erster Triggermarke wird das Einspritzende ermittelt, indem eine erste Zeitkonstante zu dem Einspritzbeginn d.h. zu der ersten Triggermarke hinzuaddiert wird. In einem zweiten Verfahrensschritt wird dann ausgehend von dem auf diese Weise bestimmten Einspritzende der Zündzeitpunkt als zweite Triggermarke bestimmt, indem eine zweite Zeitkonstante oder eine zweite Kombination aus einer zweiten Zeitkonstante und einem zweiten Kurbelwinkelintervall zu dem zuvor bestimmten Einspritzende hinzuaddiert wird.

Die Verwendung einer Zeitkonstanten für die Bestimmung des Einspritzendes führt zu einer Verschiebung des Einspritzendes nach früh bei zu niedrigen Drehzahlen bzw. nach spät bei zu hohen Drehzahlen, während die eingespritzte Kraftstoffmenge nahezu unverändert bleibt.

Die Verschiebung des Einspritzendes führt indirekt zur einer Verschiebung des Zündzeitpunktes, da der Zündzeitpunkt im zweiten Verfahrensschritt ausgehend vom Einspritzende und nicht ausgehend vom Einspritzbeginn - wie in den Figuren 1a und 1b dargestellt - ermittelt wird. Die im Zusammenhang mit den Figuren 1a und 1b beschriebenen Effekte der Zündzeitpunktverschiebung werden verstärkt, so daß die selbstregelnde Drehzahlanpassung empfindlicher reagiert d. h. schon bei kleineren Drehzahlschwankungen mit einer vergleichsweise großen Verschiebung des Zündzeitpunktes in den Verbrennungsprozeß eingreift.

Hinsichtlich der Bestimmung des Zündzeitpunktes im Rahmen des zweiten Verfahrensschrittes gelten die allgemeinen thermodynamischen Zusammenhänge.

Dabei sind zwei Grenzfälle denkbar, nämlich daß die Kombination eine reine Zeitkonstante ist oder sich vollständig als Kurbelwinkelintervall darstellt.

Die Verwendung einer Zeitkonstante führt zu einer Verschiebung des Zündzeitpunktes nach früh bzw. nach spät. Die sich dabei einstellenden Effekt wurden bereits mehrfach beschrieben. Die Verwendung eines Kurbelwinkelintervalls zur Bestimmung des Zündzeitpunktes ist ohne Einfluß auf die Lage des Zündzeitpunktes relativ zum Einspritzende, so daß bei dieser Variante lediglich über die Verschiebung des Einspritzendes auf den Zündzeitpunkt Einfluß genommen werden kann.

Eine Kombination aus einer Zeitkonstanten und einem Kurbelwinkelintervall führt in Abhängigkeit von der Gewichtung der beiden die Kombination bildenden Anteile zu einer mehr oder weniger starken Verschiebung des Zündzeitpunktes.

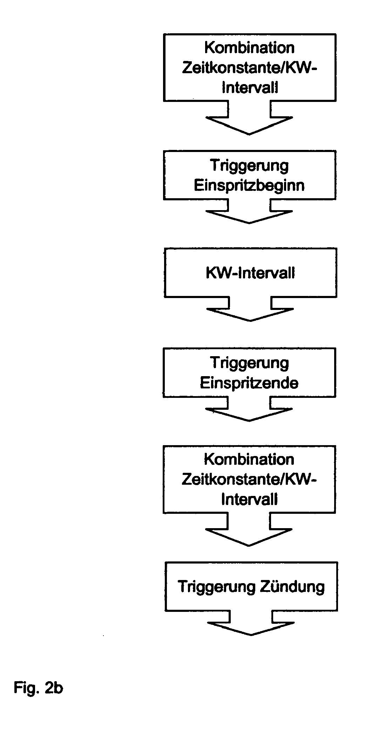

Figur 2b zeigt eine vierte Ausführungsform des Verfahrens. Im Unterschied zu der in Figur 2a dargestellten Verfahrensvariante wird dabei in einem ersten Verfahrenschritt zur Bestimmung des Einspritzendes ein Kurbelwinkelintervall verwendet, was ebenfalls für eine Anpassung der Istdrehzahl an die Solldrehzahl genutzt werden kann, auch wenn dabei keine Verschiebung des Zündzeitpunktes stattfindet, sondern der Ausgleich der Drehungleichförmigkeit über eine Veränderung der eingespritzten Kraftstoffmenge vorgenommen wird.

Die Verwendung eines unveränderten Kurbelwinkelintervalls führt bei zu niedrigen Istdrehzahlen zu einer Verlängerung der Einspritzdauer und damit zu einer Erhöhung der eingespritzten Kraftstoffmenge. Die Folge ist eine Anhebung des effektiven Mitteldrucks pₘₑ, was eine Beschleunigung der Kurbelwelle verursacht und zu einer Erhöhung der Istdrehzahl führt. Die Festlegung des Einspritzendes mittels Kurbelwinkelintervall verstärkt somit den Effekt, der sich aus einer Verschiebung des Zündzeitpunktes ergibt, wobei die Lage des Einspritzendes unverändert bleibt.

Ist die Istdrehzahl höher als die Solldrehzahl führt die Verwendung eines unveränderten Kurbelwinkelintervalls infolge der zu hohen Drehzahl zu einer Verkürzung der Einspritzdauer und damit zu einer Reduzierung der eingespritzten Kraftstoffmenge, was zu einer Absenkung des effektiven Mitteldrucks pₘₑ führt. Der verringerte effektive Mitteldruck pₘₑ bedingt eine Verzögerung der Kurbelwelle und damit eine Absenkung der Istdrehzahl.

Figur 3a zeigt eine fünfte Ausführungsform des Verfahrens, die auf der in Figur 2a dargestellten Ausführungsform aufbaut, weshalb an dieser Stelle nur ergänzend ausgeführt werden soll. Im übrigen wird Bezug genommen auf Figur 2a und die im Zusammenhang mit Figur 2a gemachten Ausführungen.

In Figur 3a ist explizit dargestellt, daß die verwendeten Zeitkonstanten und Kurbelwinkelintervalle Kennfeldern entnommen werden, in denen diese als von Betriebsparametern der Brennkraftmaschine abhängigen Variablen abgelegt sind. Als Betriebsparameter kann die Drehzahl und/oder die Last und/oder dergleichen verwendet werden.

Die in Figur 3a dargestellte Verfahrensvariante ist dadurch gekennzeichnet, daß zur Bestimmung des Einspritzbeginns d. h. der ersten Triggermarke ausgehend von einer vorgegebenen Start-Triggermarke eine Kombination aus einer Zeitkonstanten und einem Kurbelwinkelintervall zu der Start-Triggermarke hinzuaddiert wird.

Hierdurch wird eine weitere Möglichkeit zur Einflußnahme auf den Zündzeitpunkt und damit auf die Drehzahl eröffnet. Die Verwendung einer Start-Triggermarke kann indirekt dazu dienen, den Zündzeitpunkt nach früh bzw. spät zu verschieben.

Umfaßt sind auch die beiden Grenzfälle, daß die Kombination eine reine Zeitkonstante ist oder aber sich vollständig als Kurbelwinkelintervall darstellt.

Figur 3b zeigt eine sechste Ausführungsform des Verfahrens, die auf der in Figur 2b dargestellten Ausführungsform in derselben Weise aufbaut wie Figur 3a auf Figur 2a. Daher wird an dieser Stelle lediglich Bezug genommen auf die Figuren 2b, 3a und die im Zusammenhang mit diesen Figuren gemachten Ausführungen.

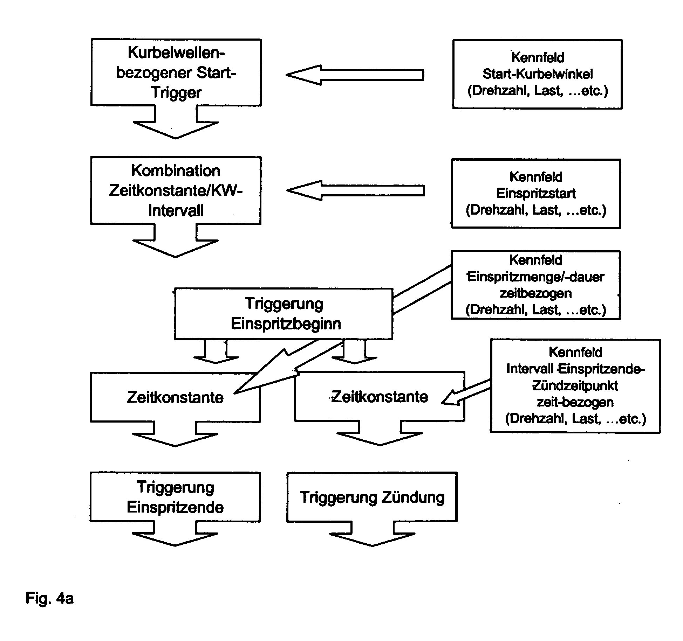

Figur 4a zeigt eine siebte Ausführungsform des Verfahrens, bei der sowohl das Einspritzende als auch der Zündzeitpunkt ausgehend vom Einspritzbeginn unter Verwendung einer Zeitkonstante parallel ermittelt wird.

Folglich handelt es sich bei der in Figur 4a dargestellten Ausführungsform hinsichtlich der Ermittlung des Zündzeitpunktes um eine Verfahrensvariante wie sie in Figur 1a illustriert ist, wohingegen hinsichtlich der Ermittlung des Einspritzendes auf die Figur 2a verwiesen werden kann. Aus diesem Grund wird, insbesondere hinsichtlich der sich einstellenden Effekte bei zu niedriger bzw. zu hoher Drehzahl, Bezug genommen auf die Figuren 1a und 2a.

Eine Einschränkung ergibt sich aber aus der Tatsache, daß das Einspritzende und der Zündzeitpunkt nicht chronologisch aufeinander aufbauend, sondern parallel und damit unabhängig voneinander ermittelt werden. Eine indirekte Verschiebung des Zündzeitpunktes durch die Verschiebung des Einspritzendes infolge zu hoher bzw. zu niedriger Drehzahlen ist ausgeschlossen.

Zur Bestimmung des Einspritzbeginns wird wie bei der in Figur 3a dargestellten Verfahrensvariante eine Start-Triggermarke verwendet.

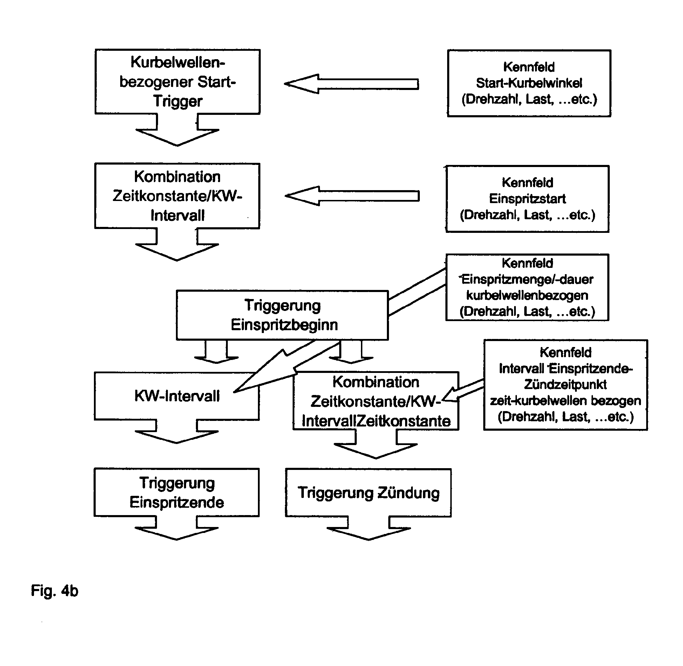

Figur 4b zeigt eine achte Ausführungsform des Verfahrens, bei der das Einspritzende unter Verwendung eines Kurbelwinkelintervalls und der Zündzeitpunkt unter Verwendung einer Kombination aus einer Zeitkonstanten und einem Kurbelwinkelintervalls ausgehend vom Einspritzbeginn parallel ermittelt wird.

Folglich handelt es sich bei der in Figur 4b dargestellten Ausführungsform hinsichtlich der Ermittlung des Zündzeitpunktes um eine Verfahrensvariante wie sie in Figur 1b illustriert ist, wohingegen hinsichtlich der Ermittlung des Einspritzendes auf die Figur 2b verwiesen werden kann. Aus diesem Grund wird, insbesondere hinsichtlich der sich einstellenden Effekte bei zu niedriger bzw. zu hoher Drehzahl, Bezug genommen auf die Figuren 1b und 2b.

Aufgrund der Tatsache, daß das Einspritzende unter Verwendung eines Kurbelwinkelintervalls ermittelt wird, variiert die eingespritzte Kraftstoffmenge mit sich ändernder Drehzahl, da die Einspritzdüse bei einem gleichgroßen Kurbelwinkelfenster unterschiedlich lange geöffnet ist. Bei zu niedriger Drehzahl ist die Einspritzdüse für eine längere Zeitspanne geöffnet, wodurch sich die Kraftstoffmenge, die in den Brennraum eingespritzt wird, vergrößert, was zu einer Anhebung des effektiven Mitteldrucks pₘₑ führt. Bei zu hoher Drehzahl ist die Einspritzdüse für eine kürzere Zeitspanne geöffnet, wodurch sich die Kraftstoffmenge, die in den Brennraum eingespritzt wird, verkleinert, was zu einer Absenkung des effektiven Mitteldrucks pₘₑ führt.

Zur Bestimmung des Einspritzbeginns wird wie bei der in Figur 3b dargestellten Verfahrensvariante eine Start-Triggermarke verwendet.

### Bezugszeichen

- pₘₑ: effektiver Mitteldruck

## Patentansprüche

1. Verfahren zum Ausgleich von Drehungleichförmigkeiten einer direkteinspritzenden Brennkraftmaschine mit Fremdzündung, bei dem die Einspritzung von Kraftstoff in mindestens einen Brennraum der Brennkraftmaschine in der Art variiert wird, daß bei einer zu niedrigen Drehzahl der Brennkraftmaschine der effektive Mitteldruck pₘₑ erhöht wird und bei einer zu hohen Drehzahl der effektive Mitteldruck pₘₑ gesenkt wird, **dadurch gekennzeichnet, daß**
■ ausgehend von einer vorgebbaren und als erste Triggermarke dienenden Kurbelwinkelmarke für den Einspritzbeginn der Einspritzung eine als zweite Triggermarke dienende Kurbelwinkelmarke für die Zündung bestimmt wird, indem eine Zeitkonstante oder eine Kombination aus einer Zeitkonstante und einem Kurbelwinkelintervall zu der ersten Triggermarke hinzuaddiert wird.

2. Verfahren nach Anspruch 1, **dadurch gekennzeichnet, daß** die Zeitkonstante und/oder das Kurbelwinkelintervall eine von mindestens einem Betriebsparameter der Brennkraftmaschine abhängige Variable ist.

3. Verfahren nach Anspruch 1 oder 2, **dadurch gekennzeichnet, daß**
■ ausgehend von der als erste Triggermarke dienenden Kurbelwinkelmarke für den Einspritzbeginn der Einspritzung das Einspritzende bestimmt wird, indem eine erste Zeitkonstante oder eine erste Kombination aus einer ersten Zeitkonstante und einem ersten Kurbelwinkelintervall zu der ersten Triggermarke hinzuaddiert wird.

4. Verfahren nach Anspruch 1 oder 2, **dadurch gekennzeichnet, daß** die Bestimmung der zweiten Triggermarke ausgehend von der ersten Triggermarke in zwei Schritten erfolgt, wobei
■ ausgehend von der als erste Triggermarke dienenden Kurbelwinkelmarke für den Einspritzbeginn der Einspritzung das Einspritzende bestimmt wird, indem eine erste Zeitkonstante oder eine erste Kombination aus einer ersten Zeitkonstante und einem ersten Kurbelwinkelintervall zu der ersten Triggermarke hinzuaddiert wird, und
■ ausgehend von dem auf diese Weise bestimmten Einspritzende die als zweite Triggermarke dienende Kurbelwinkelmarke für die Zündung bestimmt wird, indem eine zweite Zeitkonstante oder eine zweite Kombination aus einer zweiten Zeitkonstante und einem zweiten Kurbelwinkelintervall zu dem zuvor bestimmten Einspritzende hinzuaddiert wird.

5. Verfahren nach Anspruch 3 oder 4, **dadurch gekennzeichnet, daß** die erste Zeitkonstante und/oder das erste Kurbelwinkelintervall eine von mindestens einem Betriebsparameter der Brennkraftmaschine abhängige Variable ist.

6. Verfahren nach Anspruch 4 oder 5, **dadurch gekennzeichnet, daß** die zweite Zeitkonstante und/oder das zweite Kurbelwinkelintervall eine von mindestens einem Betriebsparameter der Brennkraftmaschine abhängige Variable ist.

7. Verfahren nach einem der vorherigen Ansprüche, **dadurch gekennzeichnet, daß** die als erste Triggermarke dienende Kurbelwinkelmarke für den Einspritzbeginn bestimmt wird, indem
■ ausgehend von einer vorgebbaren und als Start-Triggermarke dienenden Kurbelwinkelmarke eine dritte Zeitkonstante oder eine dritte Kombination aus einer dritten Zeitkonstanten und einem dritten Kurbelwinkelintervall zu der Start-Triggermarke hinzuaddiert wird.

8. Verfahren nach Anspruch 7, **dadurch gekennzeichnet, daß** die als Start-Triggermarke dienenden Kurbelwinkelmarke eine von mindestens einem Betriebsparameter der Brennkraftmaschine abhängige Variable ist.

9. Verfahren nach Anspruch 7 oder 8, **dadurch gekennzeichnet, daß** die dritte Zeitkonstante und/oder das dritte Kurbelwinkelintervall eine von mindestens einem Betriebsparameter der Brennkraftmaschine abhängige Variable ist.

10. Verfahren nach einem der Ansprüche 2 bis 9, **dadurch gekennzeichnet, daß** der mindestens eine Betriebsparameter die Drehzahl und/oder die Last der Brennkraftmaschine umfaßt.

11. Verfahren nach einem der vorherigen Ansprüche, **dadurch gekennzeichnet, daß** das Brennverfahren der Brennkraftmaschine im wesentlichen strahlgeführt wird.

12. Verfahren nach einem der vorherigen Ansprüche, **dadurch gekennzeichnet, daß** die Motorsteuerung der Brennkraftmaschine für die Bestimmung der Triggermarken verwendet wird.

## Claims

1. Method for compensating engine speed fluctuations of a direct injection spark ignited engine, in which the injection of fuel into at least one combustion chamber of the internal combustion engine is varied in such a way that, when the speed of the internal combustion engine is too low, the effective mean pressure pₘₑ is increased, and, when the speed is too high, the effective mean pressure pₘₑ is reduced, **characterized in that**
■ on the basis of a predefinable crank angle mark, serving as a first trigger mark, for the start of injection, a crank angle mark, serving as a second trigger mark, for the ignition is determined by virtue of the fact that a time constant or a combination of a time constant and a crank angle interval is added to the first trigger mark.

2. Method according to Claim 1, **characterized in that** the time constant and/or the crank angle interval is a variable which is dependent on at least one operating parameter of the internal combustion engine.

3. Method according to Claim 1 or 2, **characterized in that**
■ on the basis of the crank angle mark, serving as a first trigger mark, for the start of injection, the end of injection is determined by virtue of the fact that a first time constant or a first combination of a first time constant and a first crank angle interval is added to the first trigger mark.

4. Method according to Claim 1 or 2, **characterized in that** the determination of the second trigger mark on the basis of the first trigger mark is carried out in two steps, wherein
■ on the basis of the crank angle mark, serving as a first trigger mark, for the start of injection, the end of injection is determined by virtue of the fact that a first time constant or a first combination of a first time constant and a first crank angle interval is added to the first trigger mark, and
■ on the basis of the end of injection which is determined in this way, the crank angle mark which serves as a second trigger mark is determined for the ignition by virtue of the fact that a second time constant or a second combination of a second time constant and a second crank angle interval is added to the previously determined end of injection.

5. Method according to Claim 3 or 4, **characterized in that** the first time constant and/or the first crank angle interval is a variable which is dependent on at least one operating parameter of the internal combustion engine.

6. Method according to Claim 4 or 5, **characterized in that** the second time constant and/or the second crank angle interval is a variable which is dependent on at least one operating parameter of the internal combustion engine.

7. Method according to one of the preceding claims, **characterized in that** the crank angle mark which serves as a first trigger mark is determined for the start of injection by virtue of the fact that
■ on the basis of a predefinable crank angle mark which serves as a starting trigger mark, a third time constant or a third combination of a third time constant and a third crank angle interval is added to the starting trigger mark.

8. Method according to Claim 7, **characterized in that** the crank angle mark which serves as a starting trigger mark is a variable which is dependent on at least one operating parameter of the internal combustion engine.

9. Method according to Claim 7 or 8, **characterized in that** the third time constant and/or the third crank angle interval is a variable which is dependent on at least one operating parameter of the internal combustion engine.

10. Method according to one of Claims 2 to 9, **characterized in that** the at least one operating parameter comprises the rotational speed and/or the load of the internal combustion engine.

11. Method according to one of the preceding claims, **characterized in that** the combustion method of the internal combustion engine is essentially jet-controlled.

12. Method according to one of the preceding claims, **characterized in that** the engine controller of the internal combustion engine is used to determine the trigger marks.

## Revendications

1. Procédé d'équilibrage des fluctuations de rotation d'un moteur à combustion interne à injection directe avec allumage commandé, selon lequel l'injection de carburant dans au moins une chambre de combustion du moteur à combustion interne est variée de telle sorte qu'en cas de vitesse de rotation insuffisante du moteur à combustion interne, la pression moyenne effective pₘₑ est augmentée, et qu'en cas de vitesse de rotation excessive du moteur à combustion interne, la pression moyenne effective pₘₑ est réduite, **caractérisé en ce que**
* un repère d'angle de vilebrequin servant de deuxième repère pour l'allumage est déterminé en partant d'un repère d'angle de vilebrequin pour le début d'injection de l'injection qui peut être prédéfini et qui sert de premier repère de déclenchement en ajoutant au premier repère de déclenchement une constante de temps ou une combinaison d'une constante de temps et d'un intervalle d'angle de vilebrequin.

2. Procédé selon la revendication 1, **caractérisé en ce que** la constante de temps et/ou l'intervalle d'angle de vilebrequin est une variable qui dépend d'au moins un paramètre de fonctionnement du moteur à combustion interne.

3. Procédé selon la revendication 1 ou 2, **caractérisé en ce que**
* la fin de l'injection est déterminée en partant d'un repère d'angle de vilebrequin pour le début d'injection de l'injection qui sert de premier repère de déclenchement en ajoutant au premier repère de déclenchement une première constante de temps ou une première combinaison d'une première constante de temps et d'un premier intervalle d'angle de vilebrequin.

4. Procédé selon la revendication 1 ou 2, **caractérisé en ce que** la détermination du deuxième repère de déclenchement à partir du premier repère de déclenchement s'effectue en deux étapes,
* la fin de l'injection étant déterminée en partant du repère d'angle de vilebrequin pour le début d'injection de l'injection qui sert de premier repère de déclenchement en ajoutant au premier repère de déclenchement une première constante de temps ou une première combinaison d'une première constante de temps et d'un premier intervalle d'angle de vilebrequin, et
* le repère d'angle de vilebrequin qui sert de deuxième repère de déclenchement pour l'allumage est déterminé en partant de la fin de l'injection ainsi déterminée en ajoutant à la fin de l'injection déterminée précédemment une deuxième constante de temps ou une deuxième combinaison d'une deuxième constante de temps et d'un deuxième intervalle d'angle de vilebrequin.

5. Procédé selon la revendication 3 ou 4, **caractérisé en ce que** la première constante de temps et/ou le premier intervalle d'angle de vilebrequin est une variable qui dépend d'au moins un paramètre de fonctionnement du moteur à combustion interne.

6. Procédé selon la revendication 4 ou 5, **caractérisé en ce que** la deuxième constante de temps et/ou le deuxième intervalle d'angle de vilebrequin est une variable qui dépend d'au moins un paramètre de fonctionnement du moteur à combustion interne.

7. Procédé selon l'une des revendications précédentes, **caractérisé en ce que** le repère d'angle de vilebrequin pour le début d'injection qui sert de premier repère de déclenchement est déterminé
* en partant d'un repère d'angle de vilebrequin qui peut être prédéfini et qui sert de repère de déclenchement de démarrage, en ajoutant au repère de déclenchement de démarrage une troisième constante de temps ou une troisième combinaison d'une troisième constante de temps et d'un troisième intervalle d'angle de vilebrequin.

8. Procédé selon la revendication 7, **caractérisé en ce que** le repère de déclenchement de démarrage est une variable qui dépend d'au moins un paramètre de fonctionnement du moteur à combustion interne.

9. Procédé selon la revendication 7 ou 8, **caractérisé en ce que** la troisième constante de temps et/ou le troisième intervalle d'angle de vilebrequin est une variable qui dépend d'au moins un paramètre de fonctionnement du moteur à combustion interne.

10. Procédé selon l'une des revendications 2 à 9, **caractérisé en ce que** l'au moins un paramètre de fonctionnement inclut la vitesse de rotation et/ou la charge du moteur à combustion interne.

11. Procédé selon l'une des revendications précédentes, **caractérisé en ce que** le procédé de combustion du moteur à combustion interne est pour l'essentiel assisté par jet d'air.

12. Procédé selon l'une des revendications précédentes, **caractérisé en ce que** la commande du moteur à combustion interne est utilisée pour la détermination des repères de déclenchement.
